# EUROPEAN PATENT APPLICATION

(11) **EP 4 552 720 A1**
(43) Date of publication of application: **14.05.2025**
(21) Application number: 23209028.2
(22) Date of filing: 10.11.2023
(51) Int. Cl.: B01D 29/33, B01D 35/30, B01D 36/02, B01D 69/14, C02F 1/00, C02F 1/28, B01D 63/02

(54) **FILTER CARTRIDGE FOR A LIQUID FILTER SYSTEM**

(71) Applicant: BRITA SE, 65232 Taunusstein (DE)
(72) Inventor: HARTMANN, Tim, 65232 Taunusstein (DE); WULFF, Timm, 65232 Taunusstein (DE)

(57) **Abstract**

A filter cartridge (1) for a liquid filter system comprises a cartridge housing (2) and a number of hollow fibers (3) arranged within the cartridge housing (2) that form a hollow fiber membrane filter. At least one end of the hollow fibers (6, 10) pass through an opening (7) within the cartridge housing (2). The cartridge housing (2) comprises at least one housing wall section (11) that is made of a porous material, whereby the housing wall section (11) provides for aliquid-conducting connection between an outside of the cartridge housing (2) and an outer surface of the hollow fibers (3) inside of the cartridge housing (2). The porous material of the housing wall section (11) can comprise an adsorption material. It is also possible that the porous material of the housing wall section (11) comprises a dimensionally stable sintered element made of metal or ceramic or plastic.

## Description

### Technical Field

The invention relates to a filter cartridge for a liquid filter system with a cartridge housing and with a number of hollow fibers arranged within the cartridge housing that form a hollow fiber membrane filter, whereby at least one open end of the hollow fibers pass through an opening within the cartridge housing.

### Background of the invention

There are many different filter cartridges that can be used within filtering devices to filter a liquid that passes through a filter cartridge. Usually, a filter cartridge comprises at least one filter medium that is contained within a cartridge housing. The liquid flows into the cartridge housing and comes into contact with the filter medium, creating a filtering effect that e.g. removes unwanted particles or substances from the liquid, or that modifies characteristics of the liquid according to the filtering effect provided by the contact of the liquid with the filter medium.

In order to control the flow of the liquid and the filtering effect, many cartridge housings comprise an inlet and an outlet for the liquid, whereby the design of the filter cartridge provides for a liquid-conducting connection from the inlet to the outlet that defines a flow path for the liquid through the cartridge housing and the filter medium contained therein. The filter medium can be a free-flowing material comprising many small particles that must be retained within the filter cartridge. The filter medium may also comprise hollow fibers, whereby the liquid must pass through the porous fiber wall that creates the filtering effect. Usually, said hollow fibers are fragile and must be protected by the cartridge housing. Thus, the cartridge housing provides for a dimensionally stable shell that withholds the filter medium within the filter cartridge and that provides for mechanical stability of the filter cartridge that protects the filter medium within the cartridge housing. Furthermore, most filter cartridges are designed for being removably mounted within a filtering device, which requires a cartridge housing that allows for pushing and pulling of the filter cartridge during mounting or removal of the filter cartridge. Thus, most cartridge housings are made of a suitable polymer material that allows for easy and low-cost manufacture of the cartridge housing, that provides for sufficient mechanical stability, that prevents any fluid from leaking through the cartridge housing and that is chemically inert to the liquid to be filtered with the filter cartridge.

The openings of the cartridge housing must be covered by a cover that allows for the fluid to pass through the opening, but that withholds the filter medium within an interior of the cartridge housing. For most filter cartridges such a cover is mounted on the inside or outside of the cartridge housing and made of e.g. a woven or non-woven flexible fiber material with a pore size or a mesh size that is small enough to withhold the filter material within the interior of the cartridge housing.

In case of the filter material being hollow fibers, at least one open end of the hollow fibers runs through an opening of the cartridge housing, whereby all voids between the hollow fibers are liquid-tight sealed by e.g. an adhesive material that holds and secures the open ends of the hollow fibers running through the opening. The liquid flowing through the filter cartridge is forced to pass through the respective hollow fiber walls which creates the desired filtering effect. However, if the liquid contains large particles before passing through the hollow fiber walls, these particles tend to clog the hollow fiber walls and to reduce the flow efficiency of the filter cartridge. Thus, most filter cartridges comprising hollow fibers as filter medium also comprise a prefilter that is arranged along the flow path of the liquid before the hollow fiber membrane filter.

In an embodiment described in WO 2001/007151 A2, a prefilter is mounted inside of the cartridge housing that envelopes the hollow fibers and prevents unwanted clogging of the hollow fiber arrangement within a core region of the tubular filter cartridge.

WO 2006/021966 describes a filter cartridge that is mounted to a cup of a bottle. A hollow fiber membrane filter is arranged within a filter body made from an inert polymer. The hollow fiber membrane filter is enveloped by a tubular activated carbon block that is arranged between the hollow fiber membrane filter and the surrounding cartridge housing.

US 2009/159521 A1 discloses a filter cartridge with a rod-shaped hollow fiber membrane filter that is mounted inside a cartridge housing of hollow cylindrical shape with an opening within the cylindrical shell surface of the cartridge housing. A porous shell that acts as a prefilter is arranged between the rod-shaped hollow fiber membrane filter and the cylindrical shell surface of the cartridge housing.

However, mounting such additional filter elements to the cartridge housing, whereby the additional filter elements act as prefilters for the hollow fiber membrane filter requires additional efforts during manufacturing of the filter cartridge. Furthermore, most mountings require fastening elements or at least some space next to the opening that allows for mounting the additional filter element in such a manner that the opening is tightly covered by the additional filter element.

Accordingly, there is a need for a cartridge housing that facilitates the manufacture of the cartridge housing and that does not require much space for additional filter elements next to an opening within the cartridge housing.

### Summary of the invention

The present invention relates to a filter cartridge as described above, whereby that the cartridge housing comprises at least one housing wall section that is made of a porous material and whereby the housing wall section provides for a liquid-conducting connection between an outside of the cartridge housing and an outer surface of the hollow fibers inside of the cartridge housing. Preferably, the housing wall section provides for the only liquid-conducting connection between an outside of the cartridge housing and an outer surface of the hollow fibers inside of the cartridge housing. A porous material according to the present invention differs from any material that is impermeable to liquids but subsequently to manufacture of the housing wall section provided with one or more holes that reach through the housing wall section and allow for a liquid to pass through the housing wall section. On the contrary, the housing wall section is made of a porous material that is permeable to liquids without any subsequent machining and in particular without subsequent insertion of holes or openings into the porous material. Thereby, the manufacture of the cartridge housing is facilitated. Besides, since the porous material allows to make a cartridge housing in which at least one housing wall section is made of said porous material, the cartridge housing does not or not much require space for additional filter element next to an opening within the cartridge housing, which space allows for mounting the additional filter element in such a manner that the opening is tightly covered by said additional filter element.

The cartridge housing does not require any other opening for providing a liquid-conducting connection between an outside of the cartridge housing and an outer surface of the hollow fibers inside of the cartridge housing, e.g. a hole within a polymer casing that is covered by a filter element that is mounted at a space next to such an opening.

The porous material provides for a filtering effect for the liquid that flows through the porous material. The filtering effect can be exclusively mechanical by retaining particles from the fluid above a particle size specified by the porous material. It is also possible for the porous material to comprise chemically active components like e.g. adsorption materials that remove unwanted ingredients from the liquid.

Preferably, an interior wall surface of the housing wall section made of the porous material is flush with adjacent wall areas of the cartridge housing, if there are any adjacent wall areas to the housing wall section that are oriented in the same direction as the housing wall section. Also preferably, an outer wall surface of the housing wall section made of the porous material is also flush with adjacent wall areas of the cartridge housing, if there are any adjacent wall areas to the housing wall section that are oriented in the same direction as the housing wall section. Thus, the housing wall section made of porous material being an integral part of the cartridge housing does not require more space than a conventional cartridge housing.

The housing wall section made of the porous material provides for an opening within the cartridge housing and a liquid-conducting connection to the outer surface of the hollow fibers. However, due to the porous nature of the porous material, the housing wall section acts as a prefilter to the hollow fiber membrane filter. In case that the flow path of the raw liquid that will be filtered during the flow through the filter cartridge is directed from outside the cartridge housing towards the outer surface of the hollow fibers, which is the usual direction of the flow path, the porous material of the housing wall section can be adapted to avoid large particles to reach the outer surface of the hollow fibers that might result in early clogging of the hollow fibers.

It is possible to provide for a cartridge housing with only one housing wall section made of a porous material. It is also possible to provide for two, for three or for more housing wall sections within the cartridge housing. Each of the housing wall sections can be made of an identical porous material or of different porous materials.

According to a favorable embodiment of the invention, the porous material of the housing wall section comprises an adsorption material for removing unwanted ingredients from the liquid passing through the porous material. Such an adsorption material can be e.g. activated charcoal or zeolite. It is also possible to make use of an ion exchange resin or a lead scavenger material as adsorption material. Thus, unwanted substances that adversely affect the smell or taste of the liquid can be removed by the housing wall section at the time of entering or leaving the cartridge housing without need for additional filter elements comprising activated charcoal or zeolite or any other similar material that affects the small or taste of the liquid. A filter cartridge according to such an embodiment is particularly advantageous for use with a filtering device for drinking water.

According to another advantageous embodiment of the invention, the porous material of the housing wall section comprises a dimensionally stable sintered element made of metal or ceramic or plastic. Such a sintered element made of metal or ceramic or plastic provides for a highly efficient mechanical filtration effect removing particles whose diameter is larger than the pore size of the porous material. A housing wall section made of a sintered metal or ceramic material provides for good mechanical stability even in case that the wall thickness is relatively small and e.g. similar to a wall thickness of a cartridge housing made of a polymer material that is impermeable to the liquid. The mean pore size of the housing wall section can be easily preset by preprocessing the metal or ceramic particles that are used for the sintering process during manufacture of the sintering element. Thus, the manufacture of the housing wall section allows for a simple and inexpensive manufacture of a prefilter that is suitable and adapted for combination with a hollow fiber membrane filter.

Due to the reduced space requirements for the filter cartridge with a housing wall section made of porous material, the useful volume within a container of the filtering device is larger than with conventional filter cartridges. Furthermore, the porous material may be made of or comprise an adsorption material that is solidified by a sintering process that results in a dimensionally stable but porous housing wall section. Such a porous housing wall section provides for a mechanical and chemical processing of the liquid that flows through this porous housing wall section. Thus, the porous housing wall section provides for an effective filtering effect without the need for additional space within the housing, resulting in a very compact and efficient design of the filter cartridge.

It is equally possible for granular material to be placed in a pocket or cavity formed within the porous housing wall section or by a separate cover made e.g. from a flexible fiber material. The granular material may be made of an adsorption material or any other chemically active material that removes unwanted particles or components within the liquid that flows through the filter cartridge. According to a favorable aspect of the invention, the housing wall section is covered by a flexible fiber material. The flexible fiber material can be a nonwoven fabric comprising sheet or web structures that are bonded together by entangling fiber or filaments mechanically, thermally or chemically. The flexible fiber material may also be a textile material that comprises woven or knitted fibers. It is also possible for the flexible fiber material to be a melt blown fiber material. The mesh size of the flexible fiber material can be adapted to provide for an additional filtering effect. The textile material can be arranged with respect to the cartridge housing in a manner as to fully envelope the cartridge housing including the housing wall section made of the porous material, like e.g. a bag or sachet that envelopes the cartridge housing and that can be replaced after a preset service life or after visual inspection of the flexible fiber material. The flexible fiber material can also form a cover with a size that is adapted to the size of the housing wall section, whereby the cover made of the flexible fiber material is mounted at an outer surface of the housing wall section and preferably fully covers the housing wall section. Such a flexible fiber material, either a nonwoven or a woven material, provides for an inexpensive additional filter element that can be easily attached to the cartridge housing e.g. by gluing or bonding the flexible fiber material onto the outer surface of the cartridge housing. The flexible fiber material does not require a dedicated casing or additional fastening means for mounting the flexible fiber material to the cartridge housing.

According to an advantageous aspect of the invention, the cartridge housing comprises a first end face element and a second end face element, and in that the housing wall section made of a porous material connects the first end face element with the second end face element, whereby the housing wall section provides for the only dimensionally stable material of the cartridge housing that is arranged between the first end face element and the second end face element. In such an embodiment, the housing wall section made of the porous material extends from the first end face to the second end face and provides for a very large surface area of the liquid-conducting connection between the outside of the cartridge housing and the outer surface of the hollow fibers that are arranged inside of the cartridge housing. It is also possible that the housing wall section only extends over a part of a longitudinal extension from the first end face to the second end face, resulting in a ring-shaped housing wall section arranged between the first and second end face of the cartridge housing. A cross-section of the cartridge housing can have e.g. a circular or oval shape. It is also possible that the cartridge housing has a rectangular or polygonal cross-section. The cross-section can be given by the two end faces, resulting in a cylindrical shape of the cartridge housing. However, it might be beneficial to provide for a conical shape or for a tapered section adjacent to one or both end faces in order to facilitate the insertion of the filter cartridge into a filter seating.

The housing wall section can be manufactured in one piece, resulting in a monobloc housing wall section. It is also possible to manufacture several housing wall section elements that can be combined to form the housing wall section. One or both end faces can be formed by end face elements made from a material that is impermeable for the liquid. The end face elements may be manufactured e.g. as injection-molded parts.

In yet another advantageous aspect of the invention, also the second end face element is made of a porous material. The second end face element can be made one-piece with the housing wall section. It is also possible to separately manufacture a housing wall section and a second end face element and to combine both parts to form a single housing part. The housing wall section or several housing wall sections and the second end face element can be made of the same porous material or of different porous materials. Preferably, both the housing wall section and the second end face element are made one-piece and of the same porous material.

According to a preferred embodiment of the invention, the housing wall section has a hollow cylindrical shape, and the hollow fibers are arranged within the hollow cylindrical shape of the housing wall section, whereby one end of the hollow fibers passes through the opening at a first end face of the hollow cylindrical shape of the housing wall section. Preferably, the hollow cylindrical shape has a circular cross-sectional area. The interior surrounded by the housing wall section can be filled with hollow fibers that extend from the first end face to the second end face opposite to the first end face. In case that only one outlet of the filter cartridge is required or possible due to the design of the filtering system, each of the hollow fibers may have an open first end that pass through the first end face of the cartridge housing, and a second end of the hollow fibers is closed to prevent any unwanted leakage of liquid from the second end of the hollow fibers. It is also possible to provide for a sealing of the second end of the hollow fibers, e.g. by embedding the second end of the hollow fibers into a curing adhesive or plastic material that seals all second ends of the hollow fibers that are embedded into the adhesive or plastic material before the curing process is completed.

In yet another very advantageous embodiment, the hollow fibers run with at least one curved section inside the cartridge housing, and in that both ends of each of the hollow fibers passes through the opening at the first end face of the cartridge housing. Thus, both ends of the hollow fibers can be used to drain the fluid from the interior of the cartridge housing. Each of the hollow fibers can have e.g. a U-shaped course inside of the cartridge housing, whereby both open ends of each hollow fiber pass through an opening that is located within the first end face of the cartridge housing. In combination with a large surface area of the housing wall section, e.g. with a hollow cylindrical shape of the housing wall section, the filter cartridge provides for a large inlet defined by the surface area of the housing wall section and for a large outlet defined by the sum of all cross-sectional areas of the two ends of the hollow fibers. Thus, such a filter cartridge only requires a small space, but provides for a large flow rate of the liquid during the filtering process.

According to a further aspect of such an embodiment and according to the invention, that a second end face of the hollow cylindrical shape of the housing wall section is liquid-tight sealed with a cover. The cover may be formed by an end face element that is attached and liquid-tight sealed to the second end face of the housing wall section with a hollow cylindrical shape, whereby a cross-sectional shape of the second end face and the corresponding cover may have any desired shape like e.g. circular, oval, rectangular or polygonal.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a schematic representation of a cross-sectional view of a filter cartridge comprising a cartridge housing and hollow fibers arranged within the cartridge housing,
Figure 2 illustrates a cross-sectional view of the filter cartridge shown in figure 1 along the line II-II in figure 1,
Figure 3 illustrates a schematic representation of a cross-sectional view of another embodiment of a filter cartridge,
Figure 4 illustrates a perspective view of yet another embodiment of a filter cartridge, and
Figure 5 illustrates a partial representation of a cross-sectional view similar to figures 1 and 3 of the embodiment of the filter cartridge shown in figure 4.

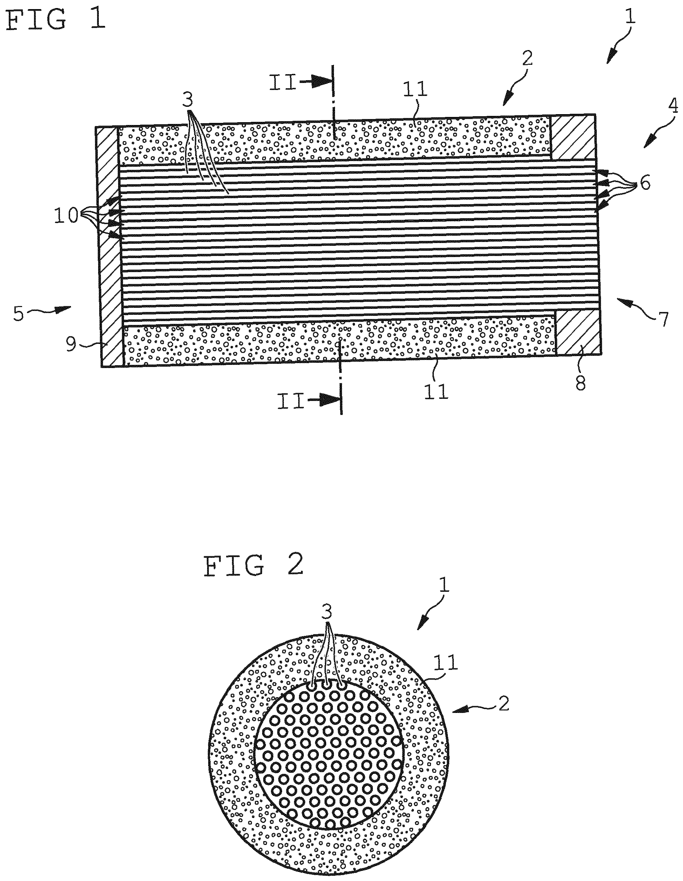

Figures 1 and 2 illustrate different cross-sectional views of a filter cartridge 1 which is suitable and intended for use in a filter system for the treatment of drinking water. The filter cartridge 1 comprises a tubular cartridge housing 2 and a number of hollow fibers 3 that are arranged within an interior of the cartridge housing 2. The hollow fibers run along a straight line from a first end face 4 of the cartridge housing 2 to a second end face 5 of the cartridge housing 2 that is opposite to the first end face 4.

A first end 6 of each of the hollow fibers 3 passes through an opening 7 in a first end face element 8 that covers the first end face 4 of the tubular cartridge housing 2. Thus, any liquid that is inside of the hollow fibers 3 may flow out of the filter cartridge 1 through the opening 7 in the first end face element 8 at the first end face 4 of the filter cartridge 1. The second end face 5 of the cartridge housing 2 is liquid-tight closed by a second end face element 9. A second end 10 of each of the hollow fibers 3 is embedded into the second end face element 9 and thereby closed.

The filter cartridge 1 also comprises a housing wall section 11 made of a porous material. The housing wall section 11 has a hollow cylindrical shape with a circular cross-sectional area, as shown in figure 2. The housing wall section 11 is made of e.g. a sintered metal or ceramic material. The porous material allows for a liquid like e.g. water to penetrate the housing wall section 11 and to flow into the interior of the filter cartridge 1 through the housing wall section 11. The liquid then penetrates into the hollow fibers 3 and exits the filter cartridge 1 through the open first ends 6 of the hollow fibers 3 that pass through the opening 7 in the first end face element 8.

A pore size of the pores of the porous material limits a size of particles that can enter into the interior of the filter cartridge 1. The pore size of the pores of the porous material is adapted to a pore size of the hollow fibers 3 in such a manner that the porous material of the housing wall section 11 acts as a prefilter to the hollow fibers 3. The housing wall sections 11 prevents larger particles that are suspended within the liquid from entering into the interior of the cartridge housing 2 that might result in an early clogging of the hollow fibers 3 and thus reduce the filtering efficiency of the filter cartridge 1 at an early stage during the service life of the filter cartridge 1. It is also possible that the housing wall section 11 is made of e.g. activated carbon or zeolite, resulting in an additional removal of unwanted smell or odor of the liquid that flows into the cartridge housing 2 to be filtered by the hollow fibers 3.

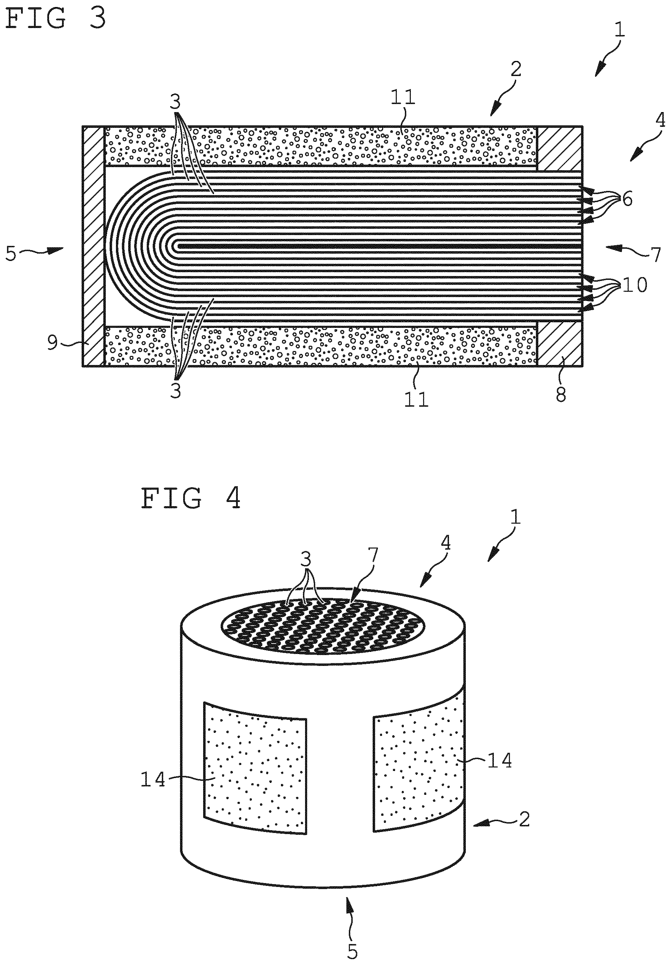

Figure 3 illustrates another embodiment of the filter cartridge 1 with a similar cartridge housing 2 as within the embodiment shown in figure 1. However, each of the hollow fibers 3 runs along a U-shaped course within the interior of the cartridge housing 2 in such a manner that both ends 6, 10, namely the first end 6 and the second end 10 of each hollow fiber 3 passes through the opening 7 of the first end element 8 that covers the first end face 4 of the tubular cartridge housing 2. In both embodiments shown in figures 1 to 3, the housing wall section 11 extends from the first end face 4 to the second end face 5 and provides for the only dimensionally stable material and element that is arranged between the first end face 4 and the second end face 5. Within the meaning of this application, the hollow fibers 3 are considered to be fragile and not dimensionally stable.

Due to the U-shaped course of the hollow fibers 3 and both ends 6, 10 of each hollow fiber 3 passing through the opening 7 and the first end face 4, the fluid that enters into the hollow fibers 3 can be efficiently drained through the opening 7 and flow out of the filter cartridge 1. Furthermore, the housing wall section 11 provides for a very large surface area that is permeable for the liquid to enter into the interior of the cartridge housing 2. Thus, the filter cartridge 1 according to the present invention allows for a very efficient filtering of the liquid with a prefilter formed by the housing wall section 11 and a hollow fiber membrane filter formed by the hollow fibers 3. As the housing wall section 11 is an integral part of the cartridge housing 2 and does not require additional space within the interior of the cartridge housing 2 or outside of the cartridge housing 2, the filter cartridge 1 only requires a very small space compared to the filtering efficiency provided by the filter cartridge 1.

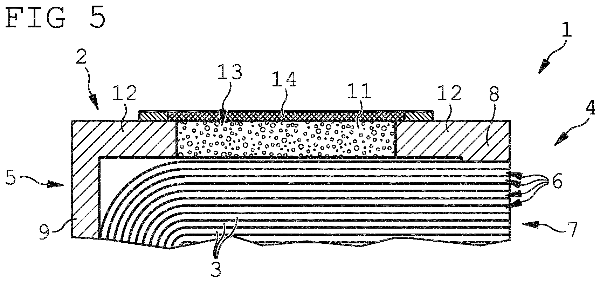

Figures 4 and 5 illustrate a perspective view and a cross-sectional view of yet another embodiment of the filter cartridge 1. The cartridge housing 2 comprises a hollow cylindrical housing framework 12 with several openings 13 within the housing framework 12. Within each of the openings 13 a corresponding housing wall section 11 with adapted dimensions and matched wall thickness is arranged. The housing wall sections 11 can be glued or pressed-in into the openings 13 of the housing framework 12 of the cartridge housing 2. Due to the matched dimensions and wall thickness, an outer surface of the housing wall sections 11 is flush with an outer surface of adjacent wall areas of the housing framework 12 of the cartridge housing 2, and an interior wall surface of the housing wall sections 11 is also flush with interior surfaces of adjacent wall areas of the housing framework 12. Thus, the housing wall sections 11 made from a porous material provide for an inlet for the fluid to enter into the interior of the cartridge housing 2 and furthermore provide for an additional filtering effect of the liquid flowing through the filter cartridge 1, but do not require more space than a common cartridge housing 2 known in prior art.

The housing wall sections 11 can be covered by a cover 14 made of a flexible fiber material like e.g. a nonwoven or woven fabric. The flexible cover 14 can be glued or welded onto the outer surface of the housing framework 12. A mesh size of the flexible fiber material can be adapted to prevent large particles that are suspended within the liquid to enter into the interior of the cartridge housing 2. The housing wall sections 11 can be made of e.g. activated carbon and provide for an additional and different treatment of the fluid that flows through the filter cartridge 1.

## Claims

1. Filter cartridge (1) for a liquid filter system with a cartridge housing (2) and with a number of hollow fibers (3) arranged within the cartridge housing (2) that form a hollow fiber membrane filter, whereby at least one end of the hollow fibers (6, 10) pass through an opening (7) within the cartridge housing (2), **characterized in that** the cartridge housing (2) comprises at least one housing wall section (11) that is made of a porous material and **in that** the housing wall section (11) provides for a liquid-conducting connection between an outside of the cartridge housing (2) and an outer surface of the hollow fibers (3) inside of the cartridge housing (2).

2. Filter cartridge (1) according to claim 1, **characterized in that** the housing wall section (11) provides for the only liquid-conducting connection between an outside of the cartridge housing (2) and an outer surface of the hollow fibers (3) inside of the cartridge housing (2).

3. Filter cartridge (1) according to claim 1 or 2, **characterized in that** the porous material of the housing wall section (11) comprises an adsorption material.

4. Filter cartridge (1) according to any one of the preceding claims, **characterized in that** the porous material of the housing wall section (11) comprises a dimensionally stable sintered element made of metal or ceramic or plastic.

5. Filter cartridge (1) according to any of the preceding claims, **characterized in that** the housing wall section (11) is covered by a flexible fiber material.

6. Filter cartridge (1) according to any one of the preceding claims, **characterized in that** the cartridge housing (2) comprises a first end face element (8) and a second end face element (9), and **in that** the housing wall section (11) made of a porous material connects the first end face element (8) with the second end face element (9), whereby the housing wall section (11) provides for the only dimensionally stable material of the cartridge housing (2) that is arranged between the first end face element (8) and the second end face element (9).

7. Filter cartridge (1) according to claim 6, **characterized in that** the second end face element (9) is made of a porous material.

8. Filter cartridge (1) according to any one of the preceding claims, **characterized in that** any one of the preceding claims, **characterized in that** the housing wall section (11) has a hollow cylindrical shape, and **in that** the hollow fibers (3) are arranged within the hollow cylindrical shape of the housing wall section (11), whereby at least one end (6, 10) of the hollow fibers (3) passes through the opening (7) at a first end face (4) of the hollow cylindrical shape of the housing wall section (11).

9. Filter cartridge (1) according to any one of the preceding claims, **characterized in that** the hollow fibers (3) run with at least one curved section inside the cartridge housing (2), and **in that** both ends (6, 10) of each of the hollow fibers (3) passes through the opening (7) at the first end face (4) of the cartridge housing (2).

10. Filter cartridge (1) according to claim 8 or claim 9, **characterized in that** a second end face (5) of the hollow cylindrical shape of the housing wall section (11) is liquid-tight sealed with a cover.
